# FASCICULE DE BREVET EUROPEEN

(11) **EP 0 963 890 B1**
(45) Date de publication et mention de la délivrance du brevet: **18.12.2002**
(21) Numéro de dépôt: 99401172.4
(22) Date de dépôt: 12.05.1999
(51) Int. Cl.: B60S 1/04, B60S 1/24

(54) **Essuie-glace repliable du type antagoniste papillon, pour véhicule automobile**
Faltbarer,gegenläufiger Wischer für Kraftfahrzeug
Foldable opposed type wiper for vehicle

(30) Priorité: 29.05.1998 FR 9806844
(43) Date de publication de la demande: 15.12.1999
(73) Titulaire: AUTOMOBILES PEUGEOT, 75116 Paris (FR); AUTOMOBILES CITROEN, 92200 Neuilly-sur-Seine (FR)
(72) Inventeur: Robert, Christian, 78510 Triel/Seine (FR)
(74) Mandataire: Berger, Helmut

(56) Documents cités:
- EP-A- 0 684 170
- EP-A- 0 739 793
- DE-A- 3 644 428
- FR-A- 2 667 833
- GB-A- 2 259 246

## Description

L'invention concerne un essuie-glace pour véhicule automobile et en particulier, un essuie-glace du type dit «antagoniste papillon», cf. DE-A-3 644 428.

Un tel essuie-glace comporte deux bras raclettes, destinés à nettoyer la surface d'un pare-brise d'un véhicule automobile, les axes d'articulation de ces bras raclettes étant situés de part et d'autre du véhicule et donc éloignés l'un de l'autre.

Ces deux bras effectuent leurs mouvements de descente et de montée avec un léger décalage l'un par rapport à l'autre.

Le mécanisme de commande des bras raclettes de l'essuie-glace comporte des systèmes de renvoi et de déphasage pour les faire fonctionner à partir d'un seul moteur.

Un essuie-glace de ce type permet de nettoyer une surface maximale, lorsque le pare-brise du véhicule automobile présente des dimensions importantes.

On connaît plusieurs types d'essuie-glace du type antagoniste papillon dont le mécanisme de commande comprend notamment un vilebrequin et trois paliers, dont un palier intermédiaire de déphasage, ou par exemple, une double rotule et trois paliers dont un palier intermédiaire de déphasage.

Dans tous les cas, l'essuie-glace comporte également des moyens de support pour le mécanisme de commande de forme allongée, qui s'étendent entre les deux axes d'articulation des bras raclettes. Ces moyens de support sont destinés à être montés sur la caisse du véhicule automobile.

Les moyens de support et le mécanisme de commande des essuie-glaces du type antagoniste papillon forment un ensemble monobloc. Du fait de l'éloignement des axes d'articulation des bras raclettes de l'essuie-glace, cet ensemble est très encombrant et sa mise en place sur le véhicule automobile est relativement difficile.

L'invention a pour but de pallier ces inconvénients en proposant un essuie-glace du type antagoniste papillon dont l'encombrement peut être considérablement réduit, avant son montage sur le véhicule automobile, ce qui facilite à la fois son stockage et sa mise en place sur le véhicule.

L'invention concerne donc un essuie-glace du type antagoniste papillon pour véhicule automobile, comprenant deux bras raclettes, un mécanisme articulé de commande desdits bras à partir d'un même moteur, lesdits bras étant reliés de part et d'autre dudit mécanisme, et des moyens de support dudit mécanisme de commande destinés à être montés sur la caisse du véhicule automobile, les bras raclettes, le mécanisme de commande et les moyens de support formant un ensemble à l'état demonté de l'essuie-glace, caractérisé en ce que lesdits moyens de support du mécanisme de commande comportent au moins deux éléments relativement mobiles qui, dans une position démontée de l'essuie-glace, sont déplaçables l'un par rapport à l'autre pour permettre le repliement dudit mécanisme de commande.

Dans une première variante de réalisation ces deux éléments des moyens de support sont articulés entre eux.

Lorsque les moyens de support du mécanisme de commande comportent deux tubes reliés à un palier intermédiaire pour un axe de renvoi de déphasage du mécanisme de commande, les deux tubes sont, dans ce cas, avantageusement articulés entre eux sur le palier intermédiaire.

Le palier intermédiaire est, de préférence, constitué par deux parties montées mobiles en rotation sur l'axe de renvoi de déphasage.

Lorsque les moyens de support du mécanisme de commande comportent au moins un tube qui porte la platine pour le support du moteur du mécanisme de commande, ce tube est avantageusement constitué de deux parties articulées entre elles sur cette platine.

Dans une autre variante de réalisation, les deux éléments constitutifs des moyens de support sont séparables.

Lorsque les moyens de support comportent deux tubes qui sont reliés à un palier intermédiaire pour l'axe de renvoi de déphasage du mécanisme de commande, les deux tubes sont avantageusement reliés de manière amovible audit palier intermédiaire.

Lorsque les moyens de support comportent au moins un tube qui porte la platine pour le support du moteur du mécanisme de commande, ce tube comporte avantageusement deux parties reliées de manière amovible à cette platine.

L'invention sera mieux comprise et d'autres buts, avantages et caractéristiques de celle-ci apparaîtront plus clairement à la lecture de la description suivante qui est faite en référence aux dessins annexés sur lesquels :

La figure 1 illustre un essuie-glace classique du type antagoniste papillon, monté sur un véhicule automobile.

La figure 2 illustre un essuie-glace selon l'invention, comprenant une articulation sur le palier intermédiaire et en position repliée.

La figure 3 comporte les figures 3a, 3b et 3c qui illustrent trois positions différentes de l'articulation de l'essuie-glace illustré à la figure 2.

La figure 4 illustre un autre essuie-glace selon l'invention du type antagoniste papillon, comportant une articulation sur la platine de support du moteur.

La figure 5 illustre un autre mode de réalisation de l'essuie-glace du type antagoniste papillon selon l'invention, comportant des moyens de support séparables, sur le palier central.

Les éléments communs aux différentes figures seront illustrés par les mêmes références.

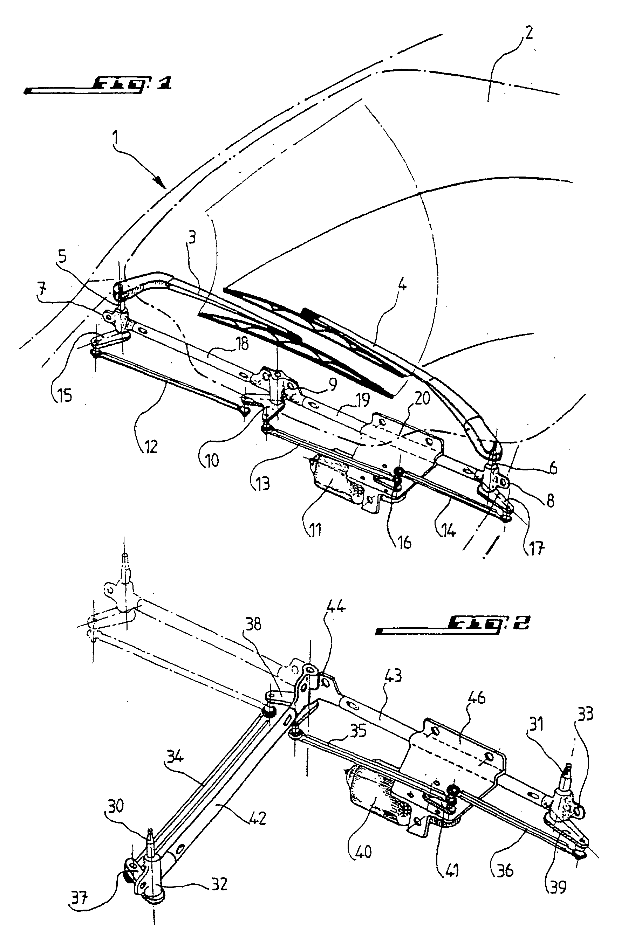

On se réfère tout d'abord à la figure 1 qui illustre un exemple d'essuie-glace classique du type antagoniste papillon.

Cet essuie-glace est monté sur un véhicule automobile 1, du côté du pare-brise 2 du véhicule.

Cet essuie-glace comporte deux bras raclettes 3 et 4 destinés à nettoyer la surface du pare-brise.

Chacun de ces bras raclettes 3, 4 est monté sur un axe 5, 6. Chacun de ces axes 5, 6 est par ailleurs reçu dans un palier d'extrémité 7, 8.

Le mécanisme de commande des bras raclettes 3 et 4 comprend, outre les axes 5 et 6 et les paliers d'extrémité 7 et 8, un palier intermédiaire 9 recevant l'axe du renvoi de déphasage 10.

Ce mécanisme comprend également un moteur 11, des bielles 12, 13 et 14 associées à des rotules, ainsi que trois manetons 15, 16 et 17.

L'essuie-glace illustré à la figure 1 comporte également des moyens de support du mécanisme de commande des bras raclettes. Ces moyens de support sont constitués par deux tubes 18 et 19, chacun d'eux étant sertis, d'une part sur un palier d'extrémité 5 ou 6 et d'autre part, sur le palier intermédiaire 9.

Sur un des tubes support, dans cet exemple le tube 19, est soudée une platiné 20 pour le support du moteur 11.

Les moyens de support sont donc rigides et sont destinés à être montés sur la caisse du véhicule 1, par des moyens appropriés.

La description qui précède a été effectuée pour un exemple particulier d'essuie-glace classique du type antagoniste, mais les remarques qui suivent valent pour tout essuie-glace de ce type qui comporte un mécanisme de commande articulé, comprenant notamment au moins deux bielles.

Comme l'illustre la figure 1, les axes 5 et 6 des deux bras raclettes 3 et 4 sont éloignés l'un de l'autre, d'environ la largeur du pare-brise 2 du véhicule automobile.

Les moyens de support 18 et 19 du mécanisme de commande des bras raclettes présentent également de ce fait une taille importante. Par ailleurs, ils sont rigides et forment donc, avec le mécanisme de commande des bras raclettes, un ensemble monobloc qui est également de dimension importante.

L'essuie-glace illustré à la figure 1 est donc très encombrant, ce qui rend difficile à la fois son stockage et sa mise en place sur un véhicule automobile.

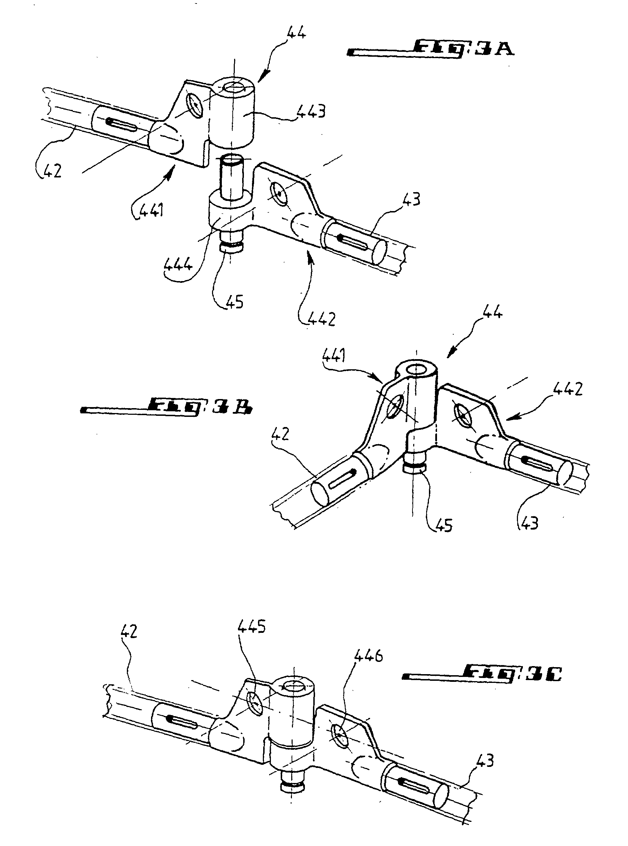

On se réfère maintenant à la figure 2 qui illustre un essuie-glace selon l'invention du type antagoniste papillon.

Pour simplifier la figure, les bras raclettes n'ont pas été illustrés sur la figure 2.

L'essuie-glace illustré à la figure 2 comporte un mécanisme de commande des bras raclettes qui est similaire à celui illustré à la figure 1.

Ainsi, on retrouve les axes des bras raclettes 30 et 31, chacun d'eux étant monté dans un palier d'extrémité 32, 33.

Le mécanisme de commande comprend en outre des biellettes 34, 35 et 36. La biellette 34 est montée entre le maneton 37 et le renvoi de déphasage 38, la biellette 35 est montée entre le renvoi de déphasage 38 et une extrémité de la bielle 36, tandis que l'autre extrémité de la bielle 36 est raccordé au palier d'extrémité 33 par le maneton 39.

Le moteur 40 actionne le maneton 41, lui-même relié sur l'axe d'articulation commun aux biellettes 35 et 36.

Les moyens de support du mécanisme de commande des bras raclettes de l'essuie-glace comportent, comme dans l'essuie-glace classique illustré à la figure 1, deux tubes 42 et 43, une extrémité de chacun de ces tubes étant fixée de manière rigide, par exemple par sertissage, sur un des paliers d'extrémité 32, 33.

Le moteur 40 est supporté par une platine 46 qui est elle-même portée par le tube 43.

La différence fondamentale que présente l'essuie-glace selon l'invention avec l'essuie-glace illustré à la figure 1 est que les deux tubes support 42 et 43 sont articulés au niveau du palier central 44 qui supporte l'axe du renvoi de déphasage 38.

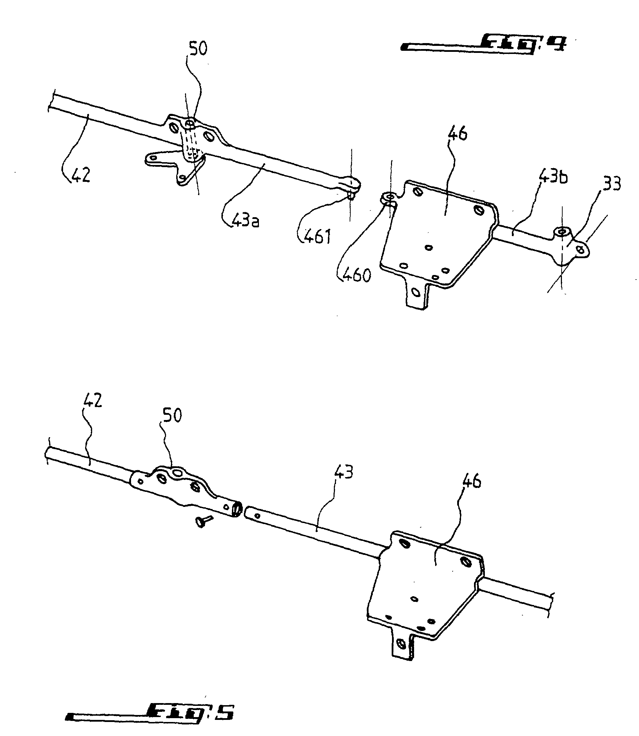

Cette articulation sera décrite plus en détail au regard des figures 3a à 3c.

La figure 2 montre en pointillé la partie gauche du mécanisme de commande et des moyens de support, lorsque l'essuie-glace est monté sur un véhicule automobile.

Dans ce cas, cette partie gauche qui comporte notamment le palier d'extrémité 32, la bielle 34 et le tube support 42 est dans le prolongement de la partie droite du mécanisme de commande et des moyens de support qui comprend notamment le tube support 43, le palier d'extrémité 33 et les biellettes 35 et 36.

La figure 2 illustre en trait plein la position que peuvent prendre le mécanisme de commande et ses moyens de support, notamment dans une position démontée de l'essuie-glace.

Du fait de l'articulation entre les deux tubes support 42 et 43, rendue possible au niveau du palier central 44, les deux tubes support 42 et 43 sont mobiles l'un par rapport à l'autre et le mécanisme de commande qui est articulé, peut alors être replié au moins en partie.

Dans cette position, illustrée en trait plein à la figure 2, l'encombrement de l'essuie-glace, notamment en longueur, peut pratiquement être réduit de moitié.

Ainsi, un essuie-glace selon l'invention du type antagoniste papillon peut être transporté plié dans le véhicule automobile et n'être déployé qu'après sa mise en place.

La description qui précède a été réalisée pour un essuie-glace du type à trois paliers dont un palier intermédiaire de renvoi de déphasage. Cependant, l'invention peut s'appliquer à tout type d'essuie-glace du type antagoniste papillon comportant un mécanisme articulé de commande des bras raclettes de l'essuie-glace.

On se réfère maintenant aux figures 3a à 3c qui décrivent de façon plus précise l'articulation entre les deux bras support 42 et 43, au niveau du palier central 44.

Comme l'illustre la figure 3a, le palier 44 se compose de deux parties 441 et 442. Chacune de ces deux parties comporte à une extrémité, un élément 443, 444 de forme tubulaire.

A leur autre extrémité, les deux parties 441 et 442 sont conçues pour recevoir l'extrémité d'un tube support 42, 43 qui y est sertie.

L'alésage central de chacun des éléments 443 et 444 est choisi de façon à ce que l'axe 45 du renvoi de déphasage 38 puisse y être introduit.

Ainsi, dans la position illustrée à la figure 3b, les deux parties 441 et 442 du palier 44 sont montées sur l'axe 45 du renvoi de déphasage.

C'est pourquoi, les éléments tubulaires 443 et 444 présentent de préférence des formes complémentaires, de façon à ce que les parties 441 et 442 puissent s'emboîter l'une dans l'autre.

Sur la figure 3b, les deux parties 441 et 442 sont disposées de façon à former entre elles un angle d'environ 90°. Les deux tubes support 42 et 43 sont donc sensiblement dans la position illustrée à la figure 2.

En référence maintenant à la figure 3, les deux parties 441 et 442 du palier 44 ont été tournées de façon à se trouver dans le prolongement l'une de l'autre. Dans cette position, l'ensemble constitué par le mécanisme de commande et ses moyens de support peut être monté sur la caisse d'un véhicule automobile.

En particulier, la mise en place de vis (non illustrées sur les figures) dans les évidements 445 et 446 permet de rendre rigide les moyens de support.

Ainsi, le palier articulé 44 permet de rendre mobile l'un par rapport à l'autre les deux tubes 42 et 43 des moyens de support. Ces tubes support sont articulés l'un par rapport à l'autre et peuvent même être séparés l'un de l'autre.

Ce palier articulé permet de replier le mécanisme de commande, comme cela a été illustré à la figure 2.

On se réfère maintenant à la figure 4 qui illustre une autre variante de réalisation d'un essuie-glace selon l'invention.

La figure 4 illustre partiellement un essuie-glace du type de celui illustré aux figures 1 et 2, en montrant plus particulièrement la partie de l'essuie-glace située entre le palier intermédiaire 50 et le palier d'extrémité 33. Les bielles et les manetons du mécanisme de commande ne sont pas en particulier illustrés.

Dans l'exemple illustré à la figure 4, le palier intermédiaire est fixe, comme celui montré à la figure 1. Ainsi, le tube support 42, le palier intermédiaire 50 et l'élément constitutif 43a du tube support 43 relié au palier intermédiaire 50, forment un ensemble rigide monobloc. Dans une variante de réalisation les tubes 42, 43a peuvent être rendus solidaires du palier intermédiaire 50 par sertissage ou tout autre moyen équivalent.

Par ailleurs, l'autre élément constitutif 43b du tube support 43 est relié d'une part, au palier d'extrémité 33 et d'autre part, à la platine 46 de support du moteur.

Les deux éléments constitutifs 43a et 43b du tube 43 sont conçus pour être articulés sur la platine 46.

A cet effet, la platine 46 comporte un élément tubulaire 460 qui est destiné à recevoir un pivot 461 porté par l'élément 43a.

De préférence, l'élément tubulaire 460 et l'extrémité de l'élément 43a portant le pivot 461 présentent des formes complémentaires pour s'emboîter l'un dans l'autre.

Bien entendu, toute autre forme d'articulation entre l'élément de tube 43a et la platine 46 pourrait être prévue. Par ailleurs, l'articulation pourrait également être prévue entre l'élément 43b du tube 43 et la platine 46.

On se réfère maintenant à la figure 5 qui illustre encore un autre mode de réalisation de l'essuie-glace selon l'invention.

La figure 5 est une vue partielle de l'essuie-glace, au niveau du palier central.

Dans ce cas, le palier central 50 est monobloc. Le tube 43 des moyens de support est conçu pour être fixé de manière amovible sur ce palier intermédiaire 50, par exemple par vissage.

Ceci constitue une différence entre cette variante de réalisation et celles illustrées aux figures 2, 3 et 4, dans lesquelles les deux tubes support sont sertis sur le palier intermédiaire.

On pourrait également envisager de fixer de manière amovible un des éléments constitutifs 43a ou 43b du tube 43, sur la platine 46.

Dans tous les cas, le tube 43 pouvant être déconnecté du palier central 50 ou un de ses éléments constitutifs pouvant être déconnecté de la platine 46, il est également possible de replier le mécanisme de commande des bras raclettes de l'essuie-glace.

Comme pour la variante de réalisation illustrée aux figures 2 et 3, le mécanisme de commande et les moyens de support sont déployés, une fois en place dans le véhicule, et le tube précédemment déconnecté du palier ou de la platine est solidarisé sur l'un ou sur l'autre avant le montage de l'essuie-glace sur la caisse du véhicule.

Dans les exemples de réalisation de l'essuie-glace selon l'invention qui ont été décrits en référence aux figures 2 à 5, les moyens de support comportent deux éléments constitutifs qui sont mobiles l'un par rapport à l'autre, au niveau du palier central ou de la platine du moteur. Bien entendu, une articulation ou une fixation amovible pourrait être prévue en tout point des tubes support. De plus, un essuie-glace selon l'invention peut également combiner plusieurs des variantes qui ont été décrites précédemment.

Enfin, la description qui précède s'est essentiellement intéressée au montage de l'essuie-glace selon l'invention sur une caisse de véhicule automobile, des opérations inverses devraient être effectuées pour le démontage de cet essuie-glace.

Enfin, les signes de référence insérés après les caractéristiques techniques figurant dans les revendications ont pour seul but de faciliter la compréhension de ces dernières et ne sauraient en limiter la portée.

## Revendications

1. Essuie-glace du type antagoniste papillon pour véhicule automobile, comprenant deux bras raclettes (3, 4), un mécanisme articulé de commande desdits bras à partir d'un même moteur (40), lesdits bras étant reliés de part et d'autre dudit mécanisme, et des moyens de support dudit mécanisme de commande, destinés à être montés sur la caisse du véhicule automobile, les bras raclettes, le mécanisme de commande et les moyens de support formant un ensemble à l'état démonté de l'essuie-glace, **caractérisé en ce que** lesdits moyens de support du mécanisme de commande se composent d'au moins deux éléments relativement mobiles (42, 43; 43a, 43b) qui, en position démontée de l'essui-glace, sont déplaçables l'un par rapport à l'autre, pour permettre le repliement du mécanisme de commande.

2. Essuie-glace selon la revendication 1, **caractérisé en ce que** les deux éléments (42, 43; 43a, 43b) des moyens de support sont articulés entre eux.

3. Essuie-glace selon la revendication 1 ou 2, **caractérisé en ce que** les deux éléments (42, 43; 43a, 43b) des moyens de support sont séparables.

4. Essuie-glace selon la revendication 2, dans lequel les moyens de support comportent deux tubes (42, 43) qui sont reliés à un palier intermédiaire (44) pour un axe (45) de renvoi de déphasage (39) du mécanisme de commande, **caractérisé en ce que** les deux tubes (42, 43) sont articulés entre eux sur le palier intermédiaire (44).

5. Essuie-glace selon la revendication 4, **caractérisé en ce que** le palier intermédiaire (44) est constitué de deux parties (441, 442) montées mobiles en rotation sur l'axe (45) de renvoi de déphasage (39).

6. Essuie-glace selon la revendication 2, dans lequel les moyens de support comportent au moins un tube (43) qui porte la platine (46) pour le support du moteur (40) du mécanisme de commande, **caractérisé en ce que** ledit tube (43) comporte deux parties (43a, 43b) articulées entre elles sur ladite platine (46).

7. Essuie-glace selon la revendication 3, dans lequel les moyens de support comportent deux tubes (42, 43) qui sont reliés à un palier intermédiaire (44) pour l'axe (45) de renvoi de déphasage (39) du mécanisme de commande, **caractérisé en ce que** les deux tubes (42, 43) sont reliés de manière amovible audit palier intermédiaire (44).

8. Essuie-glace selon la revendication 3, dans lequel les moyens de support comportent au moins un tube qui porte la platine (46) pour le support du moteur (40) du mécanisme de commande, **caractérisé en ce que** ledit tube (43) comporte deux parties (43a, 43b) reliées de manière amovible à ladite platine (46).

## Patentansprüche

1. Scheibenwischer vom Gegenläuferprinzip für Kraftfahrzeuge, mit zwei Wischarmen (3, 4), einem Gelenkgetriebe zum Betätigen der genannten Arme ausgehend von ein und demselben Motor (40), wobei die Arme auf beiden Seiten des Getriebes verbunden sind, und Mittel zum Abstützen des genannten Betätigungsgetriebes, die dazu bestimmt sind, am Fahrgestell des Kraftfahrzeugs montiert zu werden, wobei die Wischarme, das Steuergetriebe und die Abstützmittel im abmontierten Zustand des Scheibenwischers eine Einheit bilden, **dadurch gekennzeichnet, dass** die genannten Mittel zum Abstützen des Betätigungsgetriebes sich aus mindestens zwei zueinander beweglichen Teilen (42, 43; 43a, 43b) zusammensetzen, die in abmontierter Stellung des Scheibenwischers zueinander verstellbar sind, um das Einklappen des Betätigungsgetriebes zu ermöglichen.

2. Scheibenwischer nach Anspruch 1, **dadurch gekennzeichnet, dass** die beiden Teile (42, 43; 43a, 43b) der Abstützmittelzueinander angelenkt sind.

3. Scheibenwischer nach Anspruch 1 oder 2, **dadurch gekennzeichnet, dass** die beiden Teile (42, 43; 43a, 43b) der Abstützmittel abnehmbar sind.

4. Scheibenwischer nach Anspruch 2, bei dem die Abstützmittel zwei Rohre (42, 43) enthalten, die mit einem Zwischenlager (44) für eine Achse (45) zur phasenversetzten Umlenkung (39) des Betätigungsgetriebes verbunden sind, **dadurch gekennzeichnet, dass** die beiden Rohre (42, 43) am Zwischenlager (44) zueinander angelenkt sind.

5. Scheibenwischer nach Anspruch 4, **dadurch gekennzeichnet, dass** das Zwischenlager (44) aus zwei Teilen (441, 442) besteht, die um die Achse (45) zur phasenversetzten Umlenkung (39) drehbar gelagert sind.

6. Scheibenwischer nach Anspruch 2, bei dem die Abstützmittel zumindest ein Rohr (43) enthalten, das die Tragplatte (46) zum Tragen des Motors (40) des Betätigungsgetriebes trägt, **dadurch gekennzeichnet, dass** das genannte Rohr (43) zwei Teile (43a, 43b) enthält, die zueinander an der genannten Tragplatte (46) angelenkt sind.

7. Scheibenwischer nach Anspruch 3, bei dem die Abstützmittel zwei Rohre (42, 43) enthalten, die mit einem Zwischenlager (44) für eine Achse (45) zur phasenversetzten Umlenkung (39) des Betätigungsgetriebes verbunden sind, **dadurch gekennzeichnet, dass** die beiden Rohre (42, 43) lösbar mit dem genannten Zwischenlager (44) verbunden sind.

8. Scheibenwischer nach Anspruch 3, bei dem die Abstützmittel zumindest ein Rohr enthalten, das die Tragplatte (46) zum Tragen des Motors (40) des Betätigungsgetriebes trägt, **dadurch gekennzeichnet, dass** das genannte Rohr (43) zwei Teile (43a, 43b) enthält, die lösbar mit der genannten Tragplatte (46) verbunden sind.

## Claims

1. Windscreen wiper of the folding opposed butterflywing type for a motor vehicle, comprising two wiper arms (3, 4), an articulated mechanism for operating the said arms by means of one and the same motor (40), the said arms being connected on each side of the said mechanism, and means of supporting the said operating mechanism, which means are intended to be mounted on the body of the motor vehicle, the wiper arms, the operating mechanism and the support means forming an assembly when the windscreen wiper is in the unfitted state, **characterized in that** the said means of supporting the operating mechanism are made up of at least two relatively mobile elements (42, 43; 43a, 43b) which, when the windscreen wiper is in the unfitted position, can be moved one with respect to the other to allow the operating mechanism to be folded.

2. Windscreen wiper according to Claim 1, **characterized in that** the two elements (42, 43; 43a, 43b) of the support means are articulated together.

3. Windscreen wiper according to Claim 1 or 2, **characterized in that** the two elements (42, 43; 43a, 43b) of the support means are separable.

4. Windscreen wiper according to Claim 2, in which the support means comprise two tubes (42, 43) which are connected to an intermediate bearing (44) for a pin (45) of a crank (39) of the operating mechanism, **characterized in that** the two tubes (42, 43) are articulated together at the intermediate bearing (44).

5. Windscreen wiper according to Claim 4, **characterized in that** the intermediate bearing (44) is made of two parts (441, 442) mounted so that they can move in terms of rotation on the pin (45) of the crank (39).

6. Windscreen wiper according to Claim 2, in which the support means comprise at least one tube (43) which carries the mounting plate (46) for supporting the motor (40) of the operating mechanism, **characterized in that** the said tube (43) comprises two parts (43a, 43b) articulated together on the said mounting plate (46).

7. Windscreen wiper according to Claim 3, in which the support means comprise two tubes (42, 43) which are connected to an intermediate bearing (44) for the pin (45) of the crank (39) of the control mechanism, **characterized in that** the two tubes (42, 43) are connected removably to the said intermediate bearing (44).

8. Windscreen wiper according to Claim 3, in which the support means comprise at least one tube which carries the mounting plate (46) for supporting the motor (40) of the operating mechanism, **characterized in that** the said tube (43) comprises two parts (43a, 43b) connected removably to the said mounting plate (46).
